# EUROPÄISCHE PATENTSCHRIFT

(11) **EP 2 636 309 B1**
(45) Veröffentlichungstag und Bekanntmachung des Hinweises auf die Patenterteilung: **14.01.2015**
(21) Anmeldenummer: 13154510.5
(22) Anmeldetag: 08.02.2013
(51) Int. Cl.: A22C 11/00, A22C 15/00

(54) **Vorrichtung zum paarweisen Trennen von Würsten von einem Wurststrang**
Device for separating pairs of sausages from a string of sausages
Dispositif de séparation par paire de saucisses dans une chaîne de saucisses

(30) Priorität: 08.03.2012 DE 102012004731
(43) Veröffentlichungstag der Anmeldung: 11.09.2013
(73) Patentinhaber: Singer & Sohn GmbH, 92334 Berching (DE)
(72) Erfinder: Singer, Manfred, 92334 Berching (DE)
(74) Vertreter: Blaumeier, Jörg

(56) Entgegenhaltungen:
- EP-A1- 2 384 638
- WO-A1-2011/048276
- DE-A1-102005 051 404
- DE-U1- 8 913 685
- JP-A- 2002 086 386

## Beschreibung

Die Erfindung betrifft eine Vorrichtung zum paarweisen Trennen von Würsten von einem Wurststrang umfassend eine Vielzahl einzelner, über Abdrehungen miteinander verbundene Würste, welcher Wurststrang schraubenförmig um einen stab- oder steckenartigen Träger derart gewickelt ist, dass die Würste beidseits des Trägers herabhängen und die Abdrehungen sich strangoberseitig an der Trägeroberseite und strangunterseitig im frei hängenden Bereich befinden.

Bei der Produktion von Wienern, Bratwürsten, Weißwürsten und dergleichen wird die Wurstmasse mit Hilfe einer Füllmaschine in den Wurstdarm, sei es ein Naturdarm, sei es ein Kunstdarm, gefüllt (vgl. Dokument DE 10 2005 051 404 A1). Der Füllmaschine nachgeschaltet ist eine Abdreheinheit, die vom gefüllten Strang die einzelnen Würste abdreht, so dass sich ein Wurststrang ergibt, umfassend eine Vielzahl einzelner, über Abdrehungen miteinander verbundener Würste. Zum Transport wird dieser Wurststrang oft auf einen stab- oder steckenartigen Träger gewickelt, ein solcher Stecken wird häufig auch "Rauchstecken" genannt. Mehrere solcher Stecken werden anschließend in einen Wagen eingehängt und zum nächsten Produktionsschritt gefahren, wo die Würste entweder geräuchert oder im Heißdampf gegart werden. Nachfolgend ist es oft erforderlich, die Würste paarweise zu trennen, wenn kundenseitig der Wunsch besteht, die Würste im Paar in eine Verpackung einzubringen, was zumeist über eine Verpackungsmaschine erfolgt.

Der Wurststrang ist derart um den Träger gewickelt, dass die Würste jeweils beidseits des Trägers herabhängen. An der Trägeroberseite sind längs des Trägers nacheinander folgend Abdrehungen positioniert, d. h., dass sich diese Abdrehungen strangoberseitig befinden, während sich strangunterseitig, also im freihängenden Bereich, die anderen Abdrehungen befinden.

Nun ist bei einer solchen Strangaufwicklung eine Trennung der Würste im Bereich der strangoberseitigen, also an der Trägeroberseite befindlichen Abdrehungen nicht gewünscht. Denn ansonsten würden bei jedem Strang die vorderste und hinterste Wurst vereinzelt vorliegen, d. h., dass letztlich nur eine um ein Paar verringerte Paaranzahl erhalten wird, die Einzelwürste können nicht kundenwunschgemäß weiterverarbeitet werden. Aus diesem Grund werden momentan die Würste paarweise manuell getrennt, indem ein Arbeiter manuell die strangunterseitigen Abdrehungen mit einem Messer durchschneidet. Dies ist nicht nur sehr aufwendig, sondern auch relativ ungenau und führt häufig zu Beschädigungen einzelner Würste. Denn es kommt des Öfteren vor, dass, insbesondere bei relativ kurzen Abdrehungen, der Arbeiter mit dem Messer eine Abdrehung zu nah am Wurstende durchschneidet, so dass die Abdrehung in diesem Bereich aufgeht und die Wurstmasse austritt.

Der Erfindung liegt damit das Problem zugrunde, eine Vorrichtung anzugeben, die ein paarweises Vereinzeln von Würsten von einem Wurststrang ohne manuelle Tätigkeit zulässt.

Zur Lösung dieses Problems zeichnet sich eine Vorrichtung der eingangs genannten Art erfindungsgemäß durch eine Spreizeinrichtung aus, die in den schraubförmig gewickelten Wurststrang linear einfahrbar und in der eingefahrenen Stellung zum Auseinanderspreizen des Wurststrangs seitlich auseinanderfahrbar ist, sowie ferner durch ein linear unterhalb des Trägers verfahrbares Schneidmesser zum Durchschneiden der strangunterseitigen Abdrehungen, das seitlich bewegbar ist, sowie eine linear verfahrbare Bildaufnahmeeinrichtung mit zugeordnetem Bildauswertemittel zum Aufnehmen des gespreizten Wurststrangs im Bereich der strangunterseitigen Abdrehungen und zum Ermitteln von Abdrehungspositionsdaten, wobei die seitliche Verschiebung des Schneidmessers in Abhängigkeit der ermittelten Abdrehungspositionsdaten gesteuert wird.

Die erfindungsgemäße Trennvorrichtung lässt ein äußerst exaktes und schnelles paarweises Trennen ohne Verschnitt zu. Zu diesem Zweck weist sie eine Spreizeinrichtung auf, die linear in den quasi spiralig aufgewickelten, am Träger hängenden Wurststrang eingefahren wird. Der spiralig aufgewickelte Wurststrang bildet, nachdem die Würste beidseits vom Träger herabhängen, einen Kanal, in den die Spreizeinrichtung einfährt. In der Einfahrendstellung fährt die Spreizeinrichtung in eine Spreizstellung, was dazu führt, dass die links und rechts von der Spreizeinrichtung befindlichen Würste auseinanderbewegt werden. Hierbei kommt es zu einem seitlichen Öffnen des Wurststrangs, verbunden mit einem Auseinanderziehen respektive Längen der unterseitigen Abdrehungen. Zum Trennen dient ein linear verfahrbares Schneidmesser, das also längs des Trägers verfahrbar ist und mit dem die einzelnen, nunmehr gelängten, respektive gespreizten Abdrehungen durchschnitten werden. Da die Abdrehungen jedoch einerseits unterschiedlich lang sein können, andererseits aber auch positionsmäßig unterschiedlich liegen können, nachdem die Würste nicht alle exakt gleich lang sind, ist es erforderlich, für einen hochgenauen und so exakt mittig wie möglichen Schnitt die Abdrehungsposition zu erfassen. Denn es ist erforderlich, das Schneidmesser horizontal gesehen möglichst exakt in Bezug auf die Abdrehungsmitte zu positionieren, so dass diese mittig geschnitten werden kann. Zu diesem Zweck weist die erfindungsgemäße Vorrichtung nun ein Bildaufnahmemittel auf, mit dem der gespreizte Wurststrang aufgenommen wird, also die strangunterseitigen Abdrehungen erfasst werden. Ein Bildauswertemittel, also eine geeignete Bildanalyseeinrichtung, ist nun in der Lage, innerhalb der aufgenommenen Bilder exakt die Abdrehungspositionsdaten einer im Bild gezeigten Abdrehung und damit deren Mitte zu ermitteln. Diese Abdrehungspositionsdaten sind nun Grundlage für eine entsprechende Ansteuerung eines Messerbewegungsmechanismus, über den das Schneidmesser horizontal verschoben werden kann, um es exakt bezüglich der Abtrennungsmitte zu positionieren, so dass diese geschnitten werden kann. Das Bildauswertemittel und das Schneidmesser respektive dessen Bewegungsmechanismus sind insoweit koordinatenmäßig synchronisiert, dass selbstverständlich eine entsprechende koordinatengenaue Angabe der Abdrehungspositionsdaten respektive entsprechende Messereinstellung möglich ist.

Die erfindungsgemäße Vorrichtung ermöglicht es nun erstmals, eine automatische paarweise Wursttrennung vorzunehmen, wobei diese Trennung einerseits hochgenau erfolgt, da über die Bildaufnahmeeinrichtung mit zugeordnetem Bildauswertemittel eine äußerst exakte positionsmäßige Bestimmung der Abdrehungspositionen möglich ist, so dass keinerlei Verschnitt zu besorgen ist. Denn hierüber wird sichergestellt, dass die Abdrehungen stets mittig geschnitten werden. Darüber hinaus ist auch ein äußerst schnelles Trennen möglich. Denn einerseits erfolgt die Erfassung der Abdrehungspositionsdaten mit extrem hoher Geschwindigkeit, abhängig von der Rechenleistung des Bildauswertemittels, zum anderen ist die Positionierung des Schneidmessers in horizontaler Richtung, also die Ausrichtung auf die Abdrehungen, äußerst exakt und schnell möglich, so dass es möglich ist, das Schneidmesser nebst Bildaufnahmeeinrichtung sehr schnell linear durch den Wurststrang, diesen schneidend, zu bewegen.

Eines der zentralen Elemente der erfindungsgemäßen Vorrichtung ist die Spreizeinrichtung. Um sie einerseits in den gewickelten Wurststrang einzuführen, und andererseits die Würste auseinanderzuspreizen, umfasst die Spreizeinrichtung erfindungsgemäß wenigstens zwei in den Wurststrang einfahrbare Spreizstäbe, die über ein gemeinsames oder jeweils ein Antriebsmittel schwenk- oder verschiebbar an einer über ein Stellmittel linear bewegbaren Halterung angeordnet sind. Diese Spreizstäbe, die einen Durchmesser von einem oder wenigen Zentimetern besitzen, können ohne Weiteres auch in einen relativ eng hängenden Wurststrang eingefahren werden. Sollen sie von der Einfahrstellung in die Spreizstellung gebracht werden, so werden sie zur Seite geschwenkt oder zur Seite geschoben, wozu entweder ein gemeinsames Antriebsmittel vorgesehen ist, oder jeweils ein Antriebsmittel, wobei im letzteren Fall die Antriebsmittel selbstverständlich entsprechend synchronisiert sind. Die Verschiebung der Spreizstäbe selbst erfolgt über ein geeignetes Stellmittel, das eine die Spreizstäbe tragende Halterung, an welcher sie respektive relativ zu welcher sie schwenk- oder verschiebbar sind, bewegt. Ein solches Stellmittel ist bevorzugt ein entsprechender Servoantrieb respektive Servomotor.

Grundsätzlich besteht die Möglichkeit, die beiden Spreizstäbe mit ihren halterungsentfernten Enden nicht gegenzulagern, wenn sichergestellt ist, dass auch im Stabendbereich eine sichere Strangspreizung möglich ist. Bevorzugt jedoch sind die freien Enden der Spreizstäbe an einem Gegenlagerträger, der in diesem Fall linear unbewegt ist, jedoch einen entsprechenden Schwenkabschnitt mit dem Stabgegenlagern aufweist, in der Spreizstellung gegengelagert. D. h., dass über einen geeigneten Antrieb auch die im Bereich des Gegenlagers vorgesehenen Schwenkabschnitte zum Aufspreizen mit aufschwenken und eine sichere Stabführung ermöglicht ist.

Wenngleich grundsätzlich wie beschrieben die Möglichkeit besteht, einteilige Spreizstäbe zu verwenden, die an einer linear beweglichen Halterung angeordnet sind, so erfordert diese Ausgestaltung, dass die Spreizstäbe mit ihrer gesamten Länge in und aus dem Wurststrang bewegbar sind. Denn ein komplettes Herausfahren aus dem Wurststrang ist erforderlich, um sie überhaupt in den Wurststrang einfädeln zu können. Dies ist bei einer besonders zweckmäßigen Erfindungsweiterbildung nicht der Fall. Zu diesem Zweck ist es erfindungsgemäß vorgesehen, dass zwei über ein gemeinsames oder jeweils ein Stellmittel linear bewegbare Halterungen vorgesehen sind, an denen jeweils zwei Spreizstababschnitte angeordnet sind, wobei zwei Spreizstababschnitte beim Bewegen in die eingefahrene Stellung, einen Spreizstab bildend, an- oder ineinander fahren. Bei dieser Erfindungsausgestaltung sind zwei linear bewegliche Halterungen vorgesehen, die jeweils einen Spreizstababschnitt tragen, mithin also jeweils einen halben Spreizstab. Beide Halterungen sind von unterschiedlichen Seiten relativ zum Wurststrang verfahrbar, so dass jede Halterung letztlich nur den halben Fahr- respektive Wurststrangweg verfahren muss. In der zusammengefahrenen Stellung liegen die Spreizstababschnitte mit ihren freien Enden aneinander, bevorzugt greifen sie über eine Zentrierung ineinander. Hierzu kann ein Spreizstab eine Spitze und der andere Spreizstab eine entsprechende Eintiefung aufweisen, so dass sich eine Art Formschluss ergibt.

Die beiden Halterungen selbst sind synchron über das oder die Stellmittel bewegbar, so dass stets ein gleichförmiger, entsprechend getakteter Bewegungsbetrieb der Halterungen nebst der Spreizstababschnitte möglich ist.

Wie ausgeführt sind die Spreizstäbe - seien es einteilige Spreizstäbe, seien es aus zwei Spreizstababschnitten bestehende Spreizstäbe - in der Spreizstellung zur Seite beweglich. Dies geschieht wie beschrieben bevorzugt durch eine entsprechende Seitenverschwenkung relativ zur Halterung. Um dies zu ermöglichen sieht eine zweckmäßige Weiterbildung der Erfindung vor, dass beide Spreizstäbe oder die vier Spreizstababschnitte an an der jeweiligen Halterung schwenkgelagerten Schwenkarmen angeordnet sind, welche Schwenkarme mit dem Antriebsmittel bewegungsgekoppelt sind. Über diese Schwenkarme ist eine einfache Spreizstabbewegung möglich, die über das Antriebsmittel bewirkt wird.

Im Hinblick auf die Bewegungskopplung des Antriebsmittels mit den Schwenkarmen sieht eine besonders zweckmäßige Weiterbildung nach einer ersten Alternative vor, dass das Antriebsmittel entweder eine drehangetriebene Antriebswelle, insbesondere eine Sechskantwelle umfasst, auf der ein oder zwei einen Spreizstab oder Spreizstababschnitt tragende Schwenkarme angeordnet sind, wobei der oder die anderen Schwenkarme, die den anderen Spreizstab bzw. die andern Spreizstabschnitte tragen, bewegungsgekoppelt sind, entweder mit der Antriebswelle selbst oder mit den auf ihr sitzenden Schwenkarmen. Eine zweite Alternativausgestaltung sieht vor, dass das Antriebsmittel hierzu zwei drehangetriebene Antriebswellen, insbesondere Sechskantwellen umfasst, auf denen jeweils ein oder zwei den jeweiligen Spreizstab oder die Spreizstababschnitte tragende Schwenkarme angeordnet sind.

Es ist also gemäß der ersten beschriebenen Ausgestaltungsalternative eine drehangetriebene Antriebswelle vorgesehen, die bevorzugt als Sechskantwelle ausgebildet ist, mithin also bei einer Drehung über einen Formschluss zwangsläufig einen darauf befindlichen Schwenkarm mitnimmt. Üblicherweise sind auf dieser Antriebswelle axial gesehen hintereinander angeordnete, in jeweils einer Halterung befindliche Schwenkarme vorgesehen, die entweder jeweils einen Spreizstababschnitt tragen, oder von denen der eine den kompletten Spreizstab trägt, während der andere quasi als Gegenlager dient. Die anderen Schwenkarme, die den zweiten Spreizstab bzw. Spreizstababschnitte tragen, sind über eine geeignete mechanische Bewegungskopplung entweder mit den über die Antriebswelle angetriebenen Schwenkarmen bewegungsverbunden, oder mit der Antriebswelle selbst.

Die zweite, bevorzugte Ausgestaltungsvariante sieht, wie beschrieben, zwei separate Antriebswellen, vorzugsweise wiederum Sechskantwellen, vor, auf denen jeweils die Schwenkarme eines Spreizstabes bzw. der Spreizstababschnitte vorgesehen sind. Bei dieser Erfindungsausgestaltung werden also beide Spreizstäbe aktiv über jeweils eine Antriebswelle auf- und zugeschwenkt. Wie beschrieben ist die Antriebswelle bevorzugt als Sechskant- bzw. überhaupt als Mehrkantwelle ausgebildet, so dass eine einfache Mitnahme eines Schwenkarmes bei einer Wellendrehung möglich ist. Selbstverständlich ist aber auch eine andere Anbindung der Schwenkarme, beispielsweise über eine verschraubte Hülse auf den ansonsten runden Antriebswellen, denkbar.

Die Bewegung beider Antriebswellen kann letztlich auf beliebige Art und Weise erfolgen. Denkbar ist es beispielsweise, in axialer Verlängerung der Antriebswelle unmittelbar einen Antriebsmotor anzubringen. Eine bevorzugte Erfindungsausgestaltung sieht jedoch vor, dass die oder beide Antriebswellen über einen Hebelmechanismus mit wenigstens einem gemeinsamen oder jeweils mit einem Stellelement, insbesondere einem Stellzylinder, gekoppelt sind, dessen Betätigung zu einer Bewegung des Hebelmechanismus und daraus resultierend zu einer Drehung der oder jeder Antriebswelle führt. An der oder jeder aktiv angetriebenen Antriebswelle ist, vorzugsweise endseitig, ein entsprechender Schwenkhebel vorgesehen, der seinerseits mit einem Stellelement wie bevorzugt einem Stellzylinder verbunden ist. Eine Betätigung des Stellzylinders führt zu einer Verschwenkung des Hebels und daraus resultierend zu einer Wellendrehung und wiederum zu einer Spreizstabverschwenkung. Ist nur eine Antriebswelle angetrieben, so ist nur ein Stellelement vorgesehen, das über den Hebelmechanismus mit der Antriebswelle gekoppelt ist. Sind zwei aktiv angetriebene Antriebswellen vorgesehen, so kann ebenfalls nur ein Stellelement vorgesehen sein, wenn nämlich die beiden Antriebswellen jeweils einen Schwenkhebel besitzen, und beide Schwenkhebel entsprechend mechanisch bewegungsgekoppelt sind, so dass eine Betätigung des Stellelements zu einer synchronen Verschwenkung der wellenseitigen Schwenkhebel und damit einer synchronen Wellendrehung führt. Daneben kann natürlich jede Antriebswelle über einen Schwenkhebel mit einem eigenen Stellelement verbunden sein, wobei selbstverständlich die beiden Stellelemente, vorzugsweise zwei Stellzylinder, synchron betätigt werden, um eine synchrone Wellenbewegung zu realisieren.

Ein weiteres zentrales Vorrichtungselement ist die Bildaufnahmeeinrichtung, die die gespannten Abdrehungen aufnimmt. Dies geschieht besonders zweckmäßig dadurch, dass die Bildaufnahmeeinrichtung unterhalb des Wurststrangs verfährt. D. h., dass die in die Länge gezogenen Abdrehungen von unten mit dem Bildaufnahmemittel aufgenommen werden, mithin also auch die nebeneinanderliegenden Abdrehungen, je nach Größe des Bildaufnahmebereichs, exakt sichtbar sind. Als Bildaufnahmemittel wird bevorzugt eine geeignete Videokamera verwendet, die über ein geeignetes Bildaufnahmeelement wie einen CCD-Chip oder Ähnliches verfügt, und insgesamt die Möglichkeit bietet, in hoher Abfolge Einzelbilder aufzunehmen, die über das nachgeschaltete Bildauswertemittel genauestens hinsichtlich der Bestimmung der Abdrehungspositionsdaten ausgewertete werden können.

Dabei ist die Anordnung der Bildaufnahmeeinrichtung zweckmäßigerweise derart, dass ihre optische Achse vertikal zur Längsbewegungsrichtung des Schneidmessers und, gesehen in Längsbewegungsrichtung, vor dem Schneidmesser liegt. D. h., dass die Bildaufnahmeeinrichtung etwas vorlaufend vor dem Schneidmesser fährt. Hierüber wird sichergestellt, dass stets vorlaufend vor dem eigentlichen Schnitt die nächstfolgende(n) Abdrehung(en) bildmäßig erfasst und positionsmäßig ausgewertet werden, so dass hinreichend Zeit bleibt, das Schneidmesser exakt lateral in Bezug auf die Abdrehungsmitte zu positionieren.

Weiterhin ist es zweckmäßig, wenn eine, vorzugsweise zusammen mit der Bildaufnahmeeinrichtung bewegbare, Beleuchtungseinrichtung zum Beleuchten des Wurststrangs zumindest im Bereich der aufzunehmenden Abdrehungen vorgesehen ist. Über diese Beleuchtungseinrichtung ist sichergestellt, dass stets eine hinreichend detaillierte, im Hinblick auf die Konturen der Abdrehung über das Auswertemittel genauestens auswertbare Bildaufnahme möglich ist.

Dabei ist es zweckmäßig, wenn die bewegbare Beleuchtungseinrichtung in den Wurststrang einfährt und die Abdrehungen von oberhalb beleuchtet. D. h., dass sich die Bildaufnahmeeinrichtung und die Beleuchtungseinrichtung gegenüberliegen, zwischen ihnen befindet sich der Bereich der Abdrehungen. Diese sind somit exakt als entsprechender "Schatten" im jeweiligen Einzelbild erkennbar und können folglich in ihrer Position exakt bestimmt werden.

Eine besonders zweckmäßige Weiterbildung sieht vor, die Bildaufnahmeeinrichtung und/oder Beleuchtungseinrichtung mit dem Schneidmesser an einem gemeinsamen, über ein Stellmittel linear bewegbaren Träger anzuordnen. D. h., dass die zentralen der Abdrehungserfassung und dem Abdrehungsschnitt dienenden Komponenten gemeinsam verfahren werden, so dass stets gleichbleibende geometrische Verhältnisse hinsichtlich Bildaufnahme und Messerpositionierung gegeben sind. Auch ist lediglich ein Stellmittel zur linearen Trägerbewegung erforderlich, um alle diese Komponenten zu bewegen. Wiederum wird als Stellmittel bevorzugt ein Servomotor respektive Servoantrieb verwendet. Natürlich sind aber auch andere Antriebsmittel für sämtliche Linearantriebe der erfindungsgemäßen Vorrichtung einsetzbar, solange sie eine schnelle und genaue Positionierung der relevanten Komponenten ermöglichen.

Das Schneidmesser selbst ist bevorzugt eine über ein linear arbeitendes Stellmittel vertikal bewegbare Klinge. Diese vertikal stehende und vertikal bewegbare Klinge wird bei der Messerbewegung über den linear beweglichen Träger quasi senkrecht bezüglich der Abdrehungen bewegt, so dass das Messer gegen die Abdrehungen drückt und diese ohne Weiteres schneiden kann. Des Weiteren ist das Schneidmesser mittels einer Halterung an einer Linearführung horizontal über ein Stellmittel beweglich angeordnet. Hierüber erfolgt die erforderliche Horizontalverstellung des Schneidmessers in Richtung der Abdrehungsmitte, resultierend aus den von der vorlaufenden Bildaufnahmeeinrichtung ermittelten Abdrehungspositionsdaten. Die optische Achse liegt ca. 3 - 4 Abdrehungen voreilend vor dem Messer, so dass sichergestellt ist, dass immer die Abdrehungspositionsdaten der momentan zu schneidenden Abdrehung vorliegen und an das Stellmittel gegeben werden, das den Horizontalverschub des Schneidmessers steuert.

Die Bildaufnahmeeinrichtung, also die Videokamera mit dem zugeordneten Bildanalysemittel gibt hierzu die Koordinaten der Abdrehungsposition an eine SPS, die sodann das Stellmittel, beispielsweise einen elektromagnetischen Stellmotor oder Servomotor, der für die Horizontalbewegung des Schneidmessers auf der Linearachse verantwortlich ist, entsprechend ansteuert. Über den Stellmotor wird die Messerhalterung verschoben, so dass das Messer, bevorzugt die vertikal bewegbare Klinge, exakt positioniert ist. An dieser Stelle jedoch der Hinweis, dass anstelle eines vertikal bewegbaren Messers aus ein Rundmesser verwendet werden könnte, das über einen Antrieb rotiert.

Wie bereits beschrieben sind die Stellmittel respektive die Stellantriebe elektro-magnetische Linearmotoren, vorzugsweise in Form von Servomotoren, die eine hochgenaue und schnelle Bewegung respektive Positionierung ermöglichen.

Das Einbringen eines mit einem zu schneidenden Wurststrang bestückten Trägers in die Vorrichtung kann manuell erfolgen, indem ein Arbeiter einen bestückten Stecken in eine entsprechende Steckenaufnahme der Vorrichtung einsetzt oder einhängt. Dies ist jedoch mitunter umständlich. Um das Einbringen des Wurststrangs in den Schneidbereich zu vereinfachen sieht eine besonders zweckmäßige Weiterbildung der Erfindung eine den bestückten Träger aufnehmende Fördereinrichtung zum seitlichen Bewegen des Trägers in die Schneidstellung, in welcher die Spreizeinrichtung einfahrbar ist, vor. Eine solche Fördereinrichtung ermöglicht es dem Arbeiter, den bestückten Träger auf die Fördereinrichtung zu setzen, die sodann selbsttätig den Träger in den Schneidbereich fördert und exakt positioniert. Nach Durchführung des Schnitts kann der Träger mit den geschnittenen, an ihm hängenden vereinzelten Wurstpaaren an der anderen Vorrichtungsseite manuell entnommen werden. Um auch dies zu vereinfachen und zu verhindern, dass der Arbeiter tief in die Vorrichtung greifen muss, sieht zweckmäßigerweise die Erfindung die Möglichkeit vor, dass die Fördereinrichtung den Träger darüber hinaus nach Durchführung der Trennung in eine Abnahmeposition fördert, also quasi seitlich aus dem Schneidbereich heraustransportiert, wo sie bequem vom Arbeiter manuell entnommen werden kann.

Als Fördereinrichtung kommen bevorzugt zwei synchron laufende Förderbänder zum Einsatz, die den Träger in einer Horizontalebene senkrecht zur Linearbewegungsrichtung der Spreizeinrichtung fördern. Auf diese beiden Förderbänder wird der stab- oder steckenförmige Träger mit seinen beiden freien Enden gelegt, zwischen den Förderbändern hängt quasi der aufgewickelte Wurststrang herab. Unterhalb der Auflageabschnitte der Förderbänder, die den Träger tragen, bewegt sich sodann die gesamte Bilderfassungs- und Schneidmechanik, wie natürlich auch die Spreizstäbe.

Für einen einfachen Transport des Trägers weisen die Förderbänder vorzugsweise oberseitig Mitnehmerstollen auf, die der Aufnahme respektive Fixierung des jeweiligen Trägers dienen. Die Mitnehmerstollen sind so positioniert, dass der Träger möglichst exakt parallel zur Linearbewegungsrichtung des Schneidmessers liegt.

Selbst ein leichter Schrägversatz ist jedoch unschädlich, nachdem wie beschrieben über die Bildaufnahmeeinrichtung nebst Bildanalyse hochpräzise die genaue Abdrehungspositionslage erfasst wird und aufgrund der Horizontalbeweglichkeit des Schneidmessers auch ein leichter Schrägversatz ohne Weiteres ausgeglichen werden kann.

Weitere Vorteile, Merkmale und Einzelheiten der Erfindung ergeben sich aus dem im Folgenden beschriebenen Ausführungsbespiel sowie anhand der Zeichnungen. Dabei zeigen:
- Fig. 1: eine Perspektivansicht einer erfindungsgemäßen Vorrichtung,
- Fig. 2: eine Schnittansicht durch die Vorrichtung, unter Weglassung nicht erforderlicher Teile, zur Darstellung des grundsätzlichen Funktionsprinzips,
- Fig. 3: eine Teilansicht der Vorrichtung unter Darstellung des beweglichen Trägers nebst Schneidmesser, Bildaufnahmeeinrichtung und Beleuchtungseinrichtung,
- Fig. 4: der Träger aus Fig. 3 von der anderen Seite,
- Fig. 5: eine Teilansicht des Antriebsmittels zur Bewegung der Schwenkarme und damit der Spreizarme,
- Fig. 6: eine Teilansicht der Vorrichtung zur Darstellung des gesamten Spreizarmantriebs, wobei nicht relevante Teile weggelassen sind,
- Fig. 7: eine Darstellung der Spreizeinrichtung in der Ausgangsstellung,
- Fig. 8: eine Darstellung der Spreizeinrichtung in der zusammengefahrenen Stellung, und
- Fig. 9: eine Darstellung der Spreizeinrichtung in der Spreizstellung zur nachfolgenden Durchführung des Schnitts.

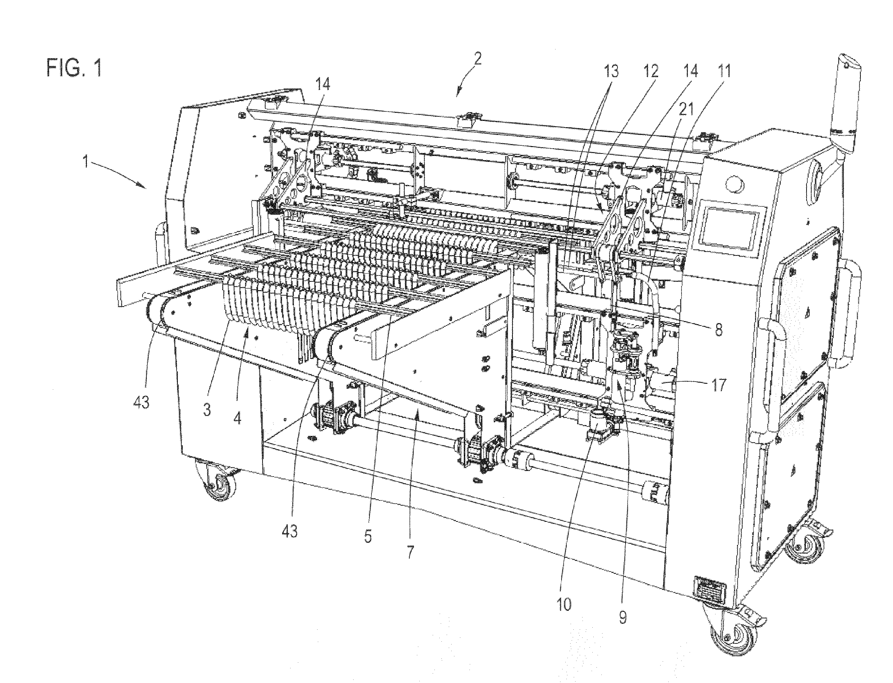

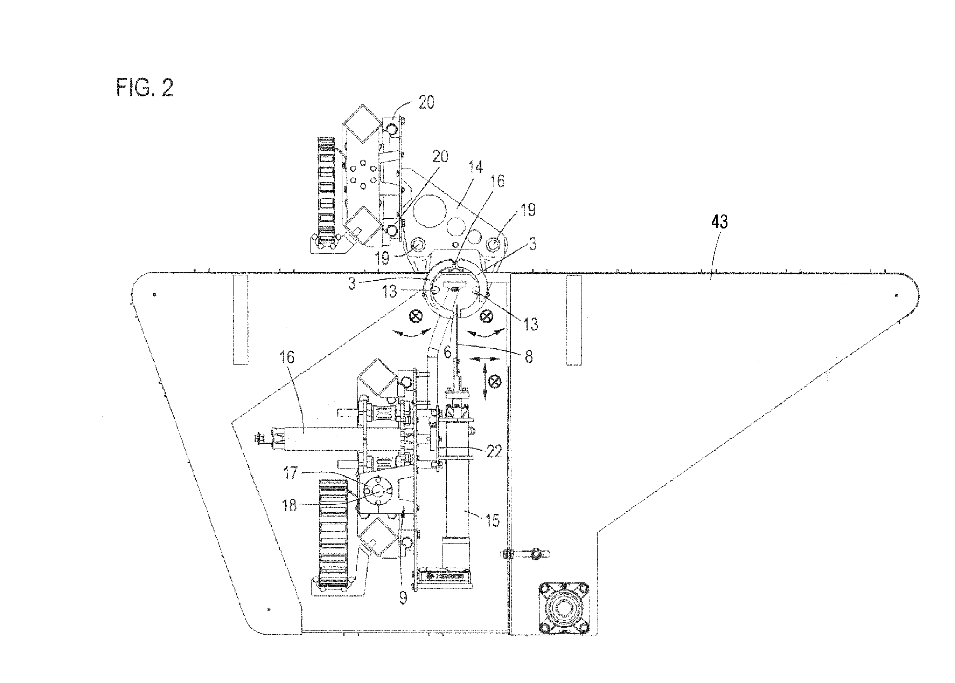

Fig. 1 zeigt in Form einer Perspektivansicht eine erfindungsgemäße Vorrichtung 1, umfassend ein aus mehreren horizontal und vertikal stehenden Bauteilen bestehendes Vorrichtungsgestells 2, an dem die diversen Vorrichtungselemente verbaut sind. Die Vorrichtung 1 dient zum paarweisen Trennen von Würsten 3 eines Wurststrangs 4, der schraubenförmig um einen stecken- oder stabartigen Träger 5 gewickelt ist. Die Würste 3 sind so um den Träger 5 gewickelt, dass die Abdrehungen 6, über die zwei benachbarte Würste verbunden sind, einerseits steckenoberseitig, andererseits steckenunterseitig vorgesehen sind, siehe hierzu Fig. 2.

Wie Fig. 1 zeigt, ruhen die mehreren Träger 5, auf denen jeweils ein Wurststrang 4 aufgewickelt ist, auf einer Fördereinrichtung 7, hier umfassend zwei Förderbänder 43, die quer durch das Vorrichtungsgestell 2 laufen und dem Transport der Träger 5 nebst den Wurststrängen 4 in den Bereich einer Schneideinrichtung mit einem Schneidmesser 8 dienen.

Die Schneideinrichtung mit dem Schneidmesser 8 befindet sich an einem Träger 9, an dem auch eine Bildaufnahmeeinrichtung 10 mit zugeordnetem Bildauswertemittel sowie eine Beleuchtungseinrichtung 11 angeordnet ist. Der Träger 9 ist linear verfahrbar, so dass er längs des Wurststrangs, dabei die strangunterseitig befindlichen Abdrehungen schneidend, bewegt werden kann.

Um dies zu ermöglichen ist des Weiteren eine Spreizeinrichtung 12 vorgesehen, umfassend zwei Spreizstäbe 13, die an ebenfalls linear verfahrbaren Halterungen 14 angeordnet sind und auseinandergefahren werden können, um, nachdem sie in den Wurststrang 4 eingefahren sind, diesen auseinanderzuspreizen und in eine gespannte Form, wie in Fig. 2 gezeigt, zu bringen. Hierüber wird die strangunterseitige Abdrehung 6 gespannt, so dass das Schneidmesser 8 die Abdrehung schneiden kann.

Der detaillierte Aufbau respektive die detaillierte Funktion der einzelnen zentralen Vorrichtungselemente wird nachfolgend beschrieben.

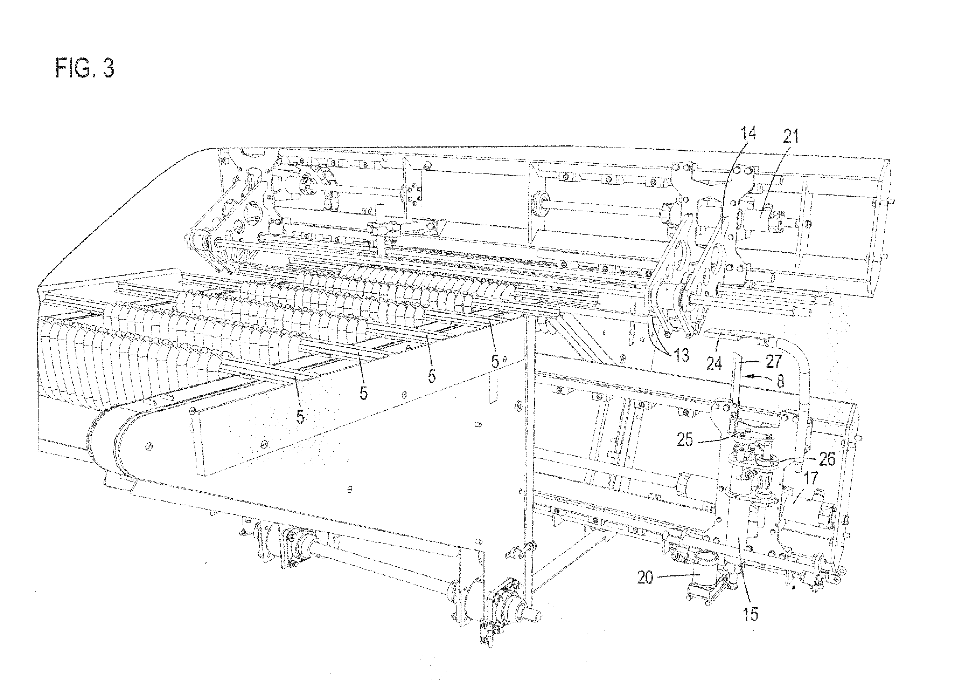

Fig. 3 zeigt in einer Teilansicht eine Frontalansicht der Vorrichtung 1 respektive einen Querschnitt, aus dem die wesentlichen Elemente wie auch deren Bewegungen zu sehen sind.

Gezeigt ist der Träger 9, an dem die Schneideinrichtung bzw. das Schneidmesser 8 angeordnet ist. In Bezug auf das Schneidmesser 8 sind die einzelnen Bewegungsrichtungen respektive Freiheitsgrade dargestellt. Das Schneidmesser 8, hier in Form einer vertikal stehenden Klinge, ist einerseits vertikal bewegbar, wie durch den Doppelpfeil dargestellt ist, wobei die Bewegung mit einer sehr hohen Frequenz erfolgt. Zur Bewegung ist ein Stellmittel 15 in Form eines Servomotors vorgesehen.

Darüber hinaus ist das Schneidmesser 8 auch, wie durch den horizontal angeordneten Doppelpfeil dargestellt, horizontal bewegbar, wozu ein weiteres Stellmittel 16, wiederum in Form eines Servomotors, vorgesehen ist. Hierzu kann die gesamte Einheit umfassend das Schneidmesser 8 nebst dessen Stellmittel 15 horizontal verschoben werden. Die Horizontalverschieblichkeit bewegt sich im Bereich weniger Zentimeter und dient dazu, das Schneidmesser 8 exakt bezüglich der Mitte der Abdrehung 6, die strangunterseitig ist, auszurichten, um diese optimal zu schneiden.

Ferner ist der Träger 9 und über ihn das Schneidmesser 8 auch in Längsrichtung der Vorrichtung 1 bewegbar, also in und aus der Zeichenebene, wie durch das Kreuzsymbol dargestellt ist. Dies erfolgt über ein weiteres Stellmittel 17, wiederum bevorzugt in Form eines Servoantriebs, der mit einer Linearführungsstange 18 zusammenwirkt und es so ermöglicht, dass das Schneidmesser 8 die komplette Strecke unterhalb des Wurststrangs linear bewegt werden kann.

Dargestellt sind ferner die Beweglichkeiten und damit Freiheitsgrad der Spreizeinrichtung 12 respektive zweier Spreizstäbe 13, wobei in der Ansicht gemäß Fig. 2 nur eine Halterung 14 gezeigt ist. Die beiden Spreizstäbe 13 sind zum einen um eine Schwenkachse 19, worauf nachfolgend noch eingegangen wird, verschwenkbar, wie durch die beiden gebogenen Doppelpfeile dargestellt ist. Die Verschwenkbarkeit respektive der Schwenkmechanismus wird nachfolgend noch im Detail erläutert.

Ferner sind die beiden Spreizstäbe 13 auch längs des Vorrichtungsgestells 2, also ebenfalls in und aus der Zeichenebene, beweglich, wie durch die beiden Kreuzsymbole dargestellt ist. Hierzu ist jede Halterung 14 über Linearführungen 20 linear beweglich gelagert, dem Längsantrieb dient wiederum ein Stellmittel 21, wiederum vorzugsweise in Form eines Servomotors. Hierüber kann also die gesamte Spreizmimik verfahren werden, so dass die Spreizstäbe 13, die in Fig. 2 in der ausgeschwenkten Spreizstellung gezeigt sind, in und aus dem Wurststrang gefahren werden können.

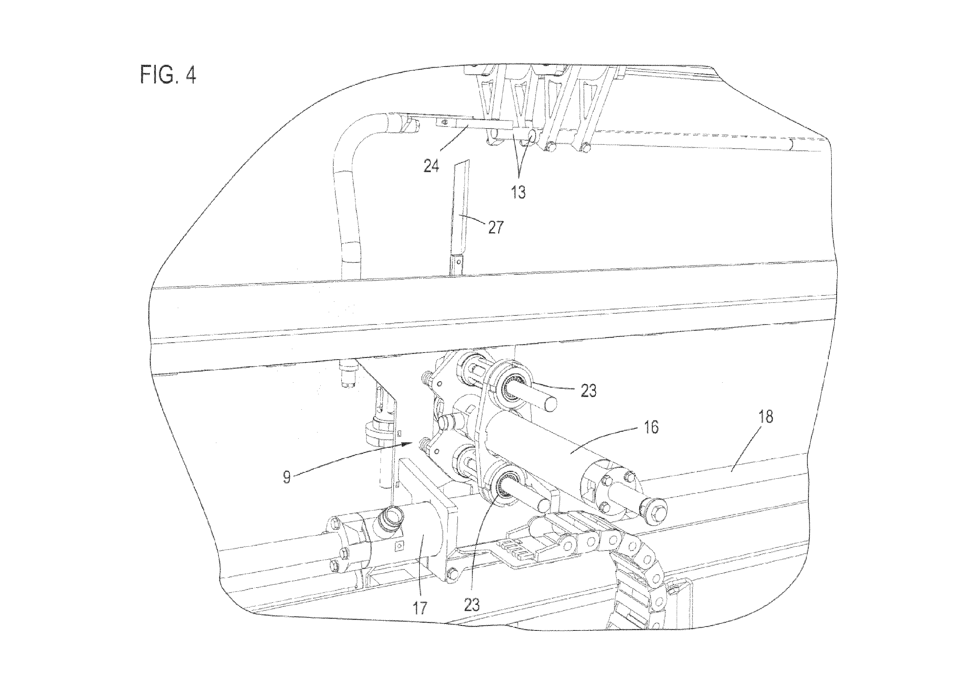

Die Fig. 3 und 4 zeigen, neben weiteren Vorrichtungsdetails, das Schneidmesser 8 nebst Träger 9 und Anbauteilen. Dem Schneidmesser 8 ist hier in Form einer vertikal stehenden Klinge 27 vorgesehen, die mit hoher Frequenz über das Stellmittel 15 vertikal bewegt werden kann. Die vertikale Schneide drückt somit senkrecht gegen die Abdrehungen, wenn diese gespannt sind, so dass diese ohne Weiteres mittig geschnitten werden können.

Das Schneidmesser 8 nebst Stellmittel 15 ist zusammen mit der Bildaufnahmeeinrichtung 10 an einer Halterung 22 angeordnet, die über das Stellmittel 16, das zur horizontalen Positionierung des Schneidmessers 8 beweglich ist. Hierzu sind entsprechende Linearführungen 23 vorgesehen, über die die Halterung 22 horizontal geführt ist.

Die Bildaufnahmeeinrichtung 10, beispielsweise ein hinreichend hochauflösender CCD-Chip oder dergleichen, ist positionsfest an der Halterung 22 angeordnet, steht folglich in einer festgelegten Relativstellung zur Klinge 27. Die Bildaufnahmeeinrichtung 10 ist etwas vorlaufend zur Klinge 27 angeordnet, d. h., dass stets einige wenige Abdrehungen 6 vorlaufend über die Bildaufnahmeeinrichtung 10 aufgenommen werden, verglichen mit der gerade geschnittenen Abdrehung 6. Die optische Achse der Bildaufnahmeeinrichtung 10 steht vertikal und verläuft parallel zur Schneidachse der Klinge 27, liegt jedoch wie gesagt etwas vorlaufend. Die Abdrehungen 6 werden vertikal von unten aufgenommen. Die Bildaufnahmeeinrichtung 10 umfasst ein Bildauswertemittel, das anhand der aufgenommenen Einzelbilder genau die Abdrehung wie auch deren Geometrie respektive Länge und insbesondere deren Mitte bestimmt. Die Bildauswertemittel kommunizieren mit einer übergeordneten Steuerungseinrichtung, die hier nicht näher gezeigt ist, beispielweise einer SPS, die ihrerseits das Stellmittel 16 für den Horizontalverschub der Klinge 27 ansteuert. D. h., dass die Abdrehungspositionsdaten bzw. die Mittendaten, die das Bildauswertemittel aus den Einzelbildern bezüglich einer Abdrehung ermittelt, unmittelbar der Steuerung des Horizontalverschubs der Klinge 27 dienen. Diese wird nun exakt mittig bezüglich der nachfolgend zu schneidenden Abdrehung 6 positioniert, so dass diese genau in der Mitte geschnitten wird. Dies geschieht wie gesagt über das Stellmittel 16, das entsprechend hochpräzise und schnell die Horizontalverstellung vornehmen kann.

Vorgesehen ist des Weiteren eine Beleuchtungseinrichtung 24, die ebenfalls an der Halterung 22 angeordnet ist, mithin also ebenfalls bei Bedarf horizontal verschoben wird. Sie befindet sich oberhalb der Klinge 27 und wird, ebenfalls bezüglich der Klinge leicht vorlaufend, in den noch zu schneidenden Wurststrang eingefahren. Sie beleuchtet also die Abdrehungen von oben, so dass über die Bildaufnahmeeinrichtung 10 ein exaktes Schattenbild der Abdrehungen respektive Würste im strangunterseitigen Bereich aufgenommen werden kann. Die Beleuchtungseinrichtung 24 kann dauerhaft leuchten, sie kann aber auch nur dann zugeschaltet werden, wenn Bilder aufzunehmen sind.

Gezeigt ist in den Fig. 3 und 4 ferner das Stellmittel 17, das der Horizontalbewegung des Trägers 9 auf der Linearführungsstange 18 dient. Der Träger 9 ist ersichtlich unmittelbar am Stellmittel 17 über geeignete Halteplatten fixiert. An ihm befinden sich sämtliche relevanten Bauteile, die der Horizontalbewegung der Halterung 22 dienen, nämlich das Stellmittel 16 nebst Linearführungen 23 etc., wobei über die Linearführungen wiederum die Halterung 22 getragen respektive beweglich ist, an der das Stellmittel 15 zur Schneidmesserbewegung angeordnet ist. Dieses ist, siehe Fig. 3, an einer Tragplatte 25 angeordnet, die ihrerseits über eine Linearführung 26 vertikal beweglich geführt ist, und unmittelbar über das Stellmittel 15 betätigt wird.

Wenngleich die Möglichkeit besteht, die Bildaufnahmeeinrichtung 10 und die Beleuchtungseinrichtung 24 wie beschrieben ebenfalls horizontal zu bewegen, so ist es selbstverständlich auch möglich, die Bildaufnahmeeinrichtung 10 und die Beleuchtungseinrichtung 24 positionsfest am Träger 9 anzuordnen, nachdem eine Horizontalbewegung nicht unbedingt erforderlich ist. Denn der Bildaufnahmebereich bzw. Beleuchtungsbereich ist groß genug, um auch ohne seitliche Nachführung stets die Abdrehungen zu erfassen, nachdem die Messerverschiebung nur im Bereich einiger weniger Zentimeter, beispielsweise bis maximal 5 cm, vorzunehmen ist, was ohne Weiteres im Erfassungsbereich der Bildaufnahmeeinrichtung 10 bzw. des Ausleuchtungsbereichs der Beleuchtungseinrichtung 24 liegt.

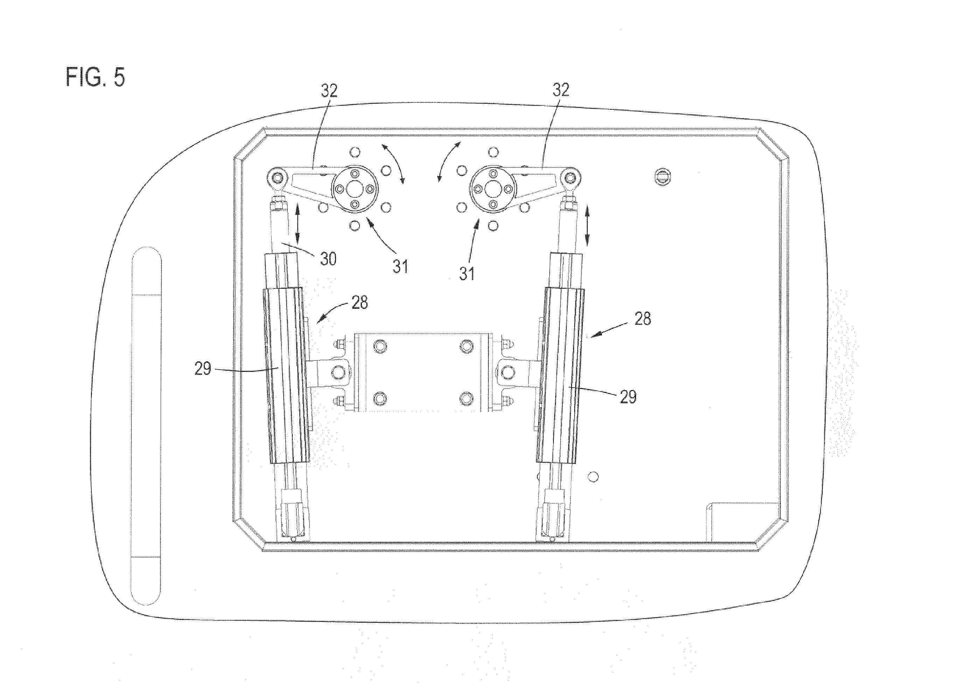

Die Fig. 5 ff. zeigen in diversen detaillierten Ansichten den Aufbau und damit die Funktionsweise der Spreizeinrichtung 12 sowie deren Antrieb. Fig. 5 zeigt zwei Stellelemente 28 in Form zweier Stellzylinder 29, die, wie durch den jeweiligen Doppelpfeil dargestellt ist, mit ihren Kolbenstangen 30 eine Längsbewegung vornehmen können. Die Kolbenstangen 30 sind mit einem Hebelmechanismus 31 gekoppelt, umfassend einen Hebel 32, der fest mit einer drehgelagerten Aufnahmehülse 33 verbunden ist, in die wiederum jeweils eine Antriebswelle 34 eingeführt ist. Jede Antriebswelle 34 ist vorzugsweise als Sechskantwelle ausgeführt. Wird jeweils ein Stellzylinder 29 betätigt, also entweder die Kolbenstange 30 eingefahren oder herausgeschoben, so kommt es zwangsläufig zu einer Verschwenkung des Hebels 32 und damit zu einer Rotation der jeweiligen Aufnahmehülse 33 und damit zu einer Rotation der darin festgelegten Antriebswelle 34.

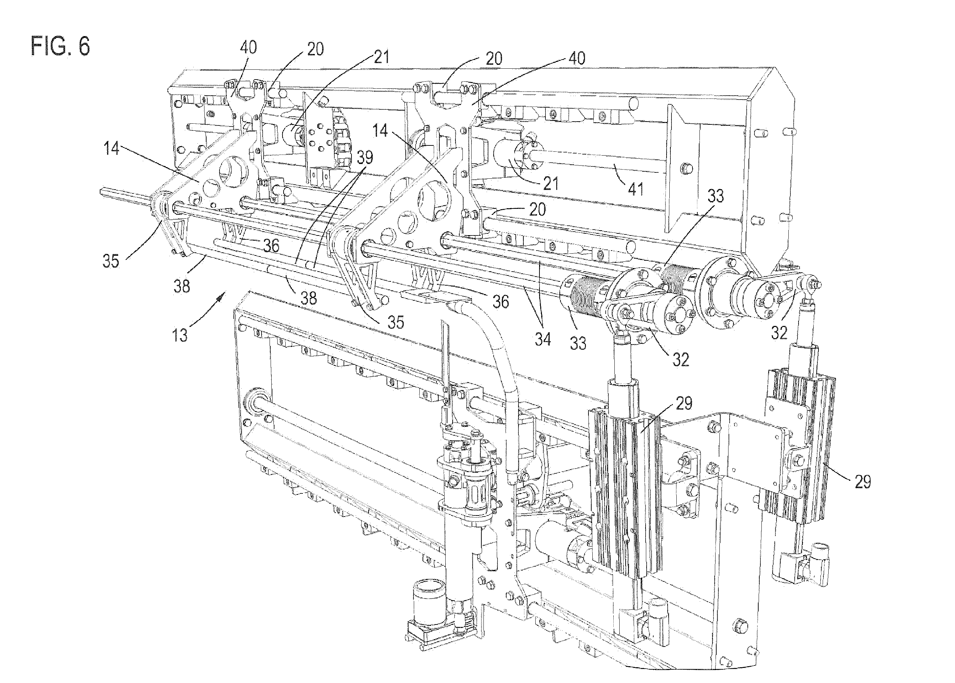

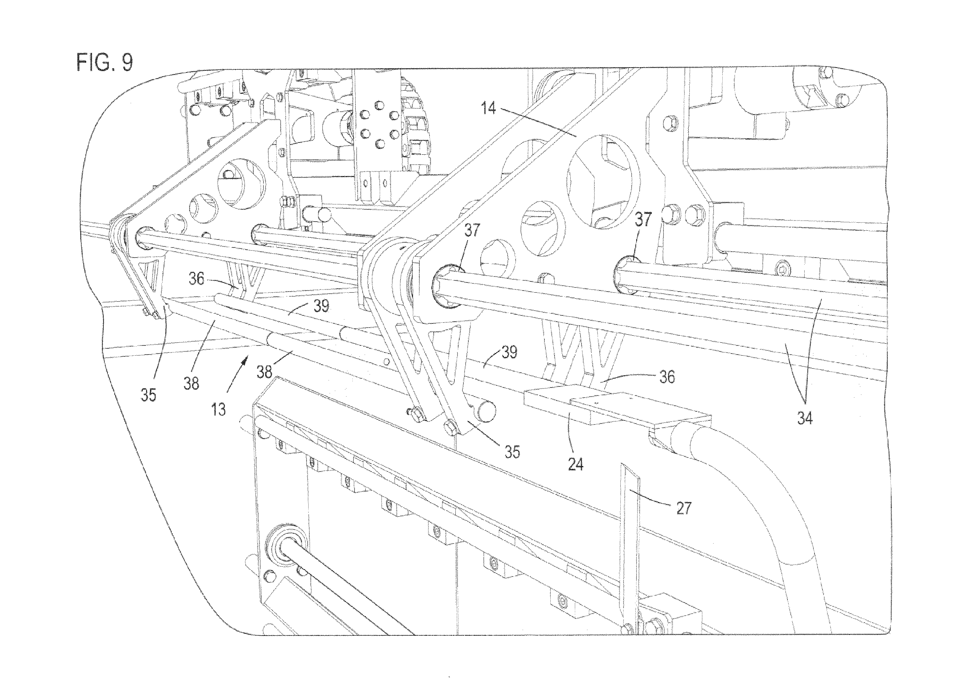

Auf jeder Antriebswelle 34 sitzen im gezeigten Ausführungsbespiel jeweils zwei Schwenkarme 35, 36, die mit der Antriebswelle 34 drehfest verbunden sind, wozu, siehe beispielsweise Fig. 9, entsprechende formkompatible Lageraugen 37 vorgesehen sind. D. h., dass eine Rotation einer Antriebswelle 34 automatisch zu einer Mitnahme und damit zu einer Verschwenkung des jeweiligen Schwenkarms 35, 36 führt, wobei natürlich beide Schwenkarme 35 respektive 36, die auf einer Antriebswelle 34 sitzen, synchron verschwenkt werden. Jeweils ein Schwenkarmpaar 35, 36 befindet sich an einer separaten Halterung 14, siehe hierzu insbesondere Fig. 6.

Am Ende jedes Schwenkarms 35, 36 ist ein Spreizstababschnitt 38, 39 vorgesehen. Beide Spreizstababschnitte 38 respektive 39 bilden, wenn sie zusammengefahren sind, siehe Fig. 6, jeweils einen Spreizstab 13. Sie sind paarweise über die jeweilige Horizontalbeweglichkeit der Halterungen 14 auseinander- und zusammenfahrbar. In der in Fig. 6 gezeigten zusammengefahrenen Position greifen die beiden Spreizstababschnittenden bevorzugt ineinander, sie sind entsprechend formkompatibel ausgebildet, bevorzugt über eine Zentrierspitze und eine Zentrieraufnahme, so dass sich in der zusammengefahrenen Position ein durchgängiger, stabilisierter Spreizstab ergibt.

In der in Fig. 6 gezeigten Position, in der die Spreizstababschnitte 38, 39 zusammengefahren sind, können folglich die hierüber gebildeten beiden Spreizstäbe 13 durch entsprechende Betätigung der Stellzylinder 29 zusammengeschwenkt oder auseinandergeschwenkt werden, was durch entsprechende Rotation der Antriebswellen 34 erfolgt.

Die Halterungen 14 selbst sind, wie beschrieben, zwar separat, jedoch synchron über jeweils ein Stellmittel 21 verfahrbar, wozu die jeweilige Halterung 14 über eine Tragplatte 40 an den jeweiligen Linearführungen 20 linear geführt ist. Die Stellmittel 21, vorzugsweise wiederum Servomotoren, laufen auf einer Linearführungsstange 41. Während der Horizontalverschiebung laufen die Halterungen 14 auch auf den Antriebswellen 34, d. h., dass die jeweiligen Bewegungskopplungen zu den Schwenkarmen 35, 36 zwar eine rotative Mitnahme ermöglichen, jedoch eine Linearverschiebung zulassen.

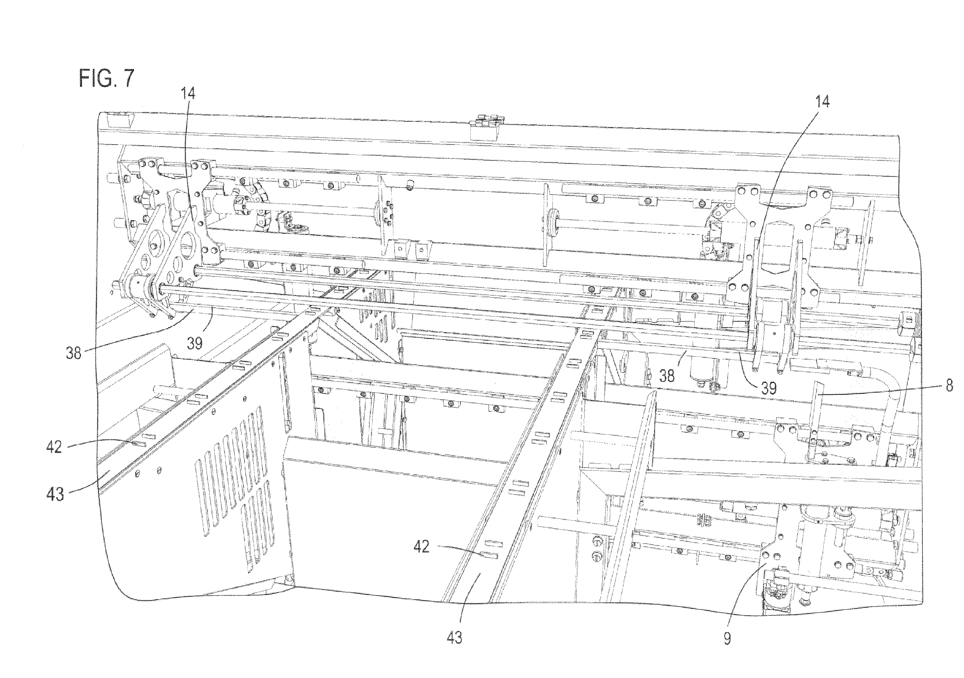

Fig. 7 zeigt eine Teilansicht der Vorrichtung 1 mit in Ausgangsstellung befindlicher Spreizeinrichtung 12. Die beiden Halterungen 14 sind maximal auseinandergefahren, der jeweilige maximale Verfahrweg beträgt ca. 35 cm, so dass sich letztlich eine Spreizstablänge von ca. 70 cm ergibt. Die beiden Spreizstababschnitte 38, 39, die an jeweils einer Halterung 14 angeordnet sind, liegen nahestmöglich und parallel nebeneinander, d. h., dass die Schwenkarme 35, 36 einer Halterung 14 zueinander geschwenkt sind, was gleichbedeutend damit ist, dass die Kolbenstangen 30 der Stellzylinder 29 eingefahren sind. Diese Position hat die Spreizeinrichtung 12 inne, nachdem zuvor ein Schnitt durch sämtliche Abdrehungen eines Wurststrangs, der im Schneidbereich war, vorgenommen wurde. Der geschnittene Wurststrang wird nun über die beiden Förderbänder 43 zur Seite hin abtransportiert, ein neuer, nachfolgend zu schneidender Wurststrang wird in den Arbeitsbereich gebracht. Der sichere Transport der Wurststränge respektive der Träger 5 erfolgt dadurch, dass die Oberseiten der Förderbänder 43 mit Stollen 42 versehen sind, zwischen die jeweils die Trägerenden eines Wurststrangträgers 5 eingelegt werden.

Wie Fig. 7 zeigt, befindet sich selbstverständlich auch das Schneidmesser 8 respektive der Träger 9 mit seiner gesamten Mimik in einer nach rechts gefahrenen Grundstellung, also weit außerhalb des eigentlichen Wurststrangschneidbereichs.

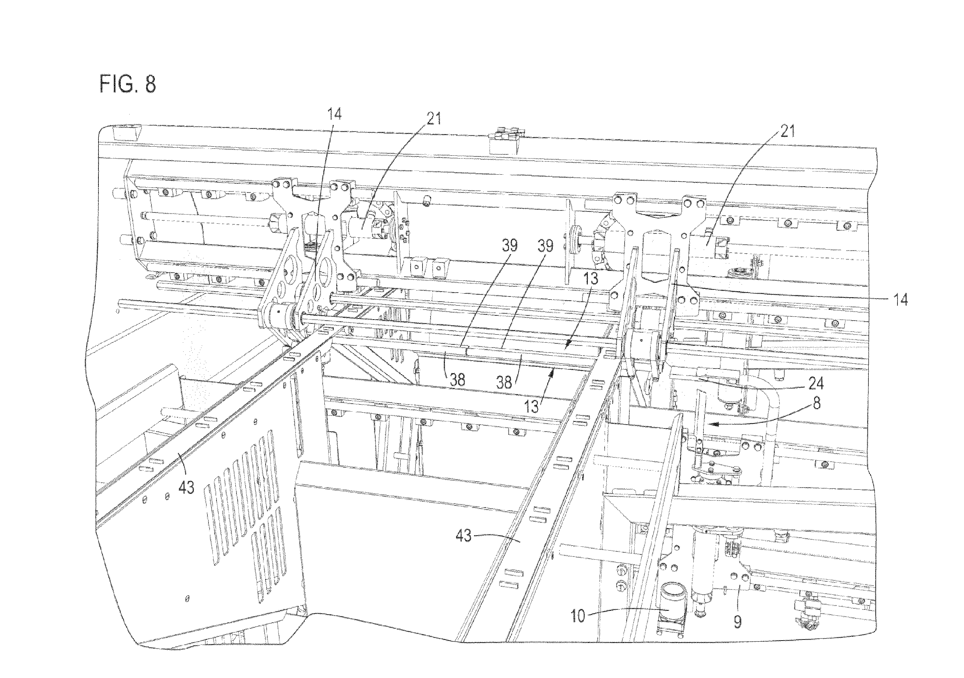

Befindet sich nun ein noch nicht geschnittener, neuer Wurststrang nach Zuförderung über die Förderbänder 43 in der Schneidposition, so werden über die entsprechenden Stellmittel 21 die beiden Halterungen 14 aufeinander zubewegt, siehe Fig. 8, bis die Enden der jeweiligen Spreizstababschnitte 38, 39 aneinanderliegen und sich zu jeweils einem Spreizstab 13 ergänzen. Nach wie vor jedoch liegen die Spreizstababschnitte 38, 39 eng nebeneinander, mithin also auch die beiden Spreizstäbe 13. Sie verlaufen innerhalb des ringförmig gewickelten Wurststrangs, siehe Fig. 2.

Wie Fig. 8 zeigt, ist mittlerweile auch der Träger 9 nebst Schneidmesser 8, Bildaufnahmeeinrichtung 10 und Beleuchtungseinrichtung 24 längsverfahren worden, er befindet sich noch kurz vor der ersten Halterung 14.

Im nächsten Schritt, siehe Fig. 9, wird nun über die beiden Stellzylinder 29 das Aufschwenken der beiden Spreizstäbe 13 veranlasst, indem die beiden Kolbenstangen 30 ausgefahren werden. Es kommt dabei zur Rotation der beiden Hebel 32 um die Antriebswellenlängsachse und damit zur Rotation der Antriebswellen 34 selbst. Dies resultiert in einer Mitnahme der beiden Schwenkarmpaare 35, 36 und damit zu einem Auseinanderschwenken der beiden Spreizstäbe 13. Da sich diese innerhalb des ringförmig gewickelten Wurststrangs befinden, wird dieser nun innenseitig über die Spreizstäbe 13 gegriffen und auseinandergedrückt, so dass es zum Spannen der jeweils strangunterseitigen Abdrehungen 6 kommt, wie in Fig. 2 gezeigt.

Nachfolgend fährt nun der Träger 9 in Richtung des Wurststrangs. Vorlaufend fährt die Beleuchtungseinrichtung 24, die etwas vor der Klinge 27 positioniert ist, in den Wurststrang ein, entsprechendes gilt für die Bildaufnahmeeinrichtung 10, die ebenfalls etwas vorlaufend zur Klinge 27 ist. Mit der Bildaufnahmeeinrichtung 10 werden nun sofort Bilder der strangunterseitigen Abdrehungen von der Unterseite her aufgenommen, die Bildauswertemittel erfassen sofort die entsprechenden Abdrehungspositionsdaten, also den Beginn und das Ende einer jeweiligen Abdrehung, was über entsprechende Geometrieparameter definiert werden kann, wie auch insbesondere die Mitte der jeweiligen Abdrehung. Insbesondere die Abdrehungspositionsdaten, die die Abdrehungsmitte definieren, werden sodann entweder unmittelbar dem Stellmittel 16 oder einer übergeordneten, das Stellmittel 16 ansteuernde Steuerungseinrichtung (SPS) gegeben, woraufhin das Stellmittel 16 die Klinge 27 exakt so positioniert, dass sie die erste Abdrehung - und natürlich jede nachfolgende Abdrehung, deren Abdrehungspositionsdaten in gleicher Weise ermittelt werden - exakt in der Mitte schneidet. Hierbei verfährt natürlich der Träger 9 nebst sämtlicher Anbauteile, also insbesondere Schneidmesser 8, Bildaufnahmeeinrichtung 10 und Beleuchtungseinrichtung 24, linear entlang des Wurststrangs, der währenddessen kontinuierlich über die Spreizstäbe 13 gespannt ist.

Nach Durchführung des Schnitts aller Abdrehungen ist der Wurststrang paarweise vereinzelt. Die geschnittenen Wurstpaare hängen beidseits des Trägers 5 herab, sind jedoch unterseitig nicht mehr über Abdrehungen verbunden, sie ruhen auf den noch auseinandergefahrenen Spreizstäbe 13. Der Träger 9 fährt nun durch die geschnittenen, jedoch noch auseinandergespreizten Wurstpaare zurück in Richtung seiner Ausgangsstellung gemäß Fig. 7. Sobald er hinreichend weit aus dem Bewegungsbereich der Spreizstäbe 13 gefahren ist, stellen die Stellzylinder 29 die Schwenkarme 35, 36 wieder zurück, d. h., die Kolbenstangen 30 werden wieder eingefahren, die Antriebswellen 34 rotieren in die andere Richtung, so dass die Schwenkarme 35, 36 und damit die Spreizstäbe 13 aufeinander zubewegt werden. Die Spreizstäbe 13 liegen dann wieder in der engen, parallelen Nachbarstellung, woraufhin die Halterungen 14 wieder über die Stellmittel auseinandergefahren werden, bis sie wieder in die in Fig. 7 gezeigte Grundstellung erreichen.

Hieran schließt sich einerseits der Abtransport des geschnittenen Wurststrangs zur Seite hin sowie synchron damit der Antransport des nächsten zu schneidenden Wurststrangs über die Förderbänder 43 an, woraufhin das Prozedere von neuem beginnt.

Während in den Ausführungsbeispielen jeder Spreizstäb 13 aus zwei Spreizstababschnitten 38, 39 besteht, ist es grundsätzlich denkbar, jeweils zwei einteilige Spreizstäbe 13 vorzusehen, die an jeweils einem Schwenkarm 35, 36 fest angeordnet sind und über eine bewegliche Halterung 14 verschoben werden können. Diese Halterung 14 muss dann natürlich den kompletten Fahrweg von beispielsweise ca. 70 cm zurücklegen, um die dann einteiligen Spreizstäbe 13 ausgehend von einer Grundstellung in den noch zu spreizenden Wurststrang einzufädeln und durchzuführen. In der Bewegungsendstellung sind beispielsweise die Spreizstabenden in entsprechenden Gegenlagerungen an der zweiten, dann jedoch nicht beweglichen Halterung 14, auch dort in entsprechenden Schwenkaufnahmen, die die Stabverschwenkung mitmachen, gegengelagert.

Bevorzugt handelt es sich bei sämtlichen Stellmitteln respektive Antriebselementen, die einer Linearbewegung dienen, um Servomotoren, die eine hochgenaue und schnelle Bewegung respektive Positionierung ermöglichen. Es können natürlich auch andere Stellmittel verwendet werden. Auch ist es grundsätzlich denkbar, die Bewegung der Antriebswellen 34 nicht über zwei Stellzylinder vorzunehmen, sondern beispielsweise über unmittelbar auf die Antriebswellenenden respektive die Antriebshülsen aufgesetzte Drehantriebe.

Schließlich kann die Bildaufnahmeeinrichtung 10 mit einer Reinigungseinrichtung versehen sein respektive eine solche zugeordnet sein, die beispielsweise mit Erreichen jeder Grundstellung, wenn also der Träger 9 aus dem Schneidbereich respektive dem Wurststrangbereich herausgefahren ist, eine Reinigung der Kamera respektive der Kameraoptik vornimmt. Die Kamera selbst ist wie ausgeführt möglichst hochauflösend, sie sollte mit hoher Bildfrequenz, beispielsweise von zwanzig Bildern pro Sekunde oder mehr, arbeiten. Auch die Bildauswertemittel sollten in der Lage sein, mit hoher Frequenz die entsprechenden Messwerte und damit Abdrehungspositionsdaten zu ermitteln. Die Abdrehungspositionsdaten werden in einem vorrichtungseigenen Koordinatensystem ermittelt, in dem zumindest das horizontale Stellmittel 16, das die horizontale Schneidmesserbewegung steuert, arbeitet, um eine hochgenaue Messerpositionierung zu ermöglichen.

## Patentansprüche

1. Vorrichtung zum paarweisen Trennen von Würsten von einem Wurststrang umfassend eine Vielzahl einzelner, über Abdrehungen (6) miteinander verbundener Würste (3), welcher Wurststrang (4) schraubenförmig um einen stab- oder steckenartigen Träger (5) derart gewickelt ist, dass die Würste (3) beidseits des Trägers (5) herabhängen und die Abdrehungen (6) sich strangoberseitig an der Trägeroberseite und strangunterseitig im frei hängenden Bereich befinden, **gekennzeichnet durch** eine Spreizeinrichtung (12), die in den schraubenförmig gewickelten Wurststrang (4) linear einfahrbar und in der eingefahrenen Stellung zum Auseinanderspreizen des Wurststrangs (4) seitlich auseinander fahrbar ist, ein linear unterhalb des Trägers (5) verfahrbares Schneidmesser (8) zum Durchschneiden der strangunterseitigen Abdrehungen (6), das seitlich bewegbar ist, sowie eine linear verfahrbare Bildaufnahmeeinrichtung (10) mit zugeordnetem Bildauswertemittel zum Aufnehmen des gespreizten Wurststrangs (4) im Bereich der strangunterseitigen Abdrehungen (6) und zum Ermitteln von Abdrehungspositionsdaten, wobei die seitliche Verschiebung des Schneidmessers (8) in Abhängigkeit der ermittelten Abdrehungspositionsdaten gesteuert wird.

2. Vorrichtung nach Anspruch 1, **dadurch gekennzeichnet, dass** die Spreizeinrichtung (12) wenigstens zwei in den Wurststrang (4) einfahrbare Spreizstäbe (13) umfasst, die über ein gemeinsames oder jeweils ein Antriebsmittel schwenk- oder verschiebbar an einer über ein Stellmittel (21) linear bewegbaren Halterung (14) angeordnet sind.

3. Vorrichtung nach Anspruch 2, **dadurch gekennzeichnet, dass** zwei über ein gemeinsames oder jeweils ein Stellmittel (21) linear bewegbare Halterungen (14) vorgesehen sind, an denen jeweils zwei Spreizstababschnitte (38, 39) angeordnet sind, wobei jeweils zwei Spreizstababschnitte (38, 39) beim Bewegen in die eingefahrene Stellung, einen Spreizstab (13) bildend, an- oder ineinander fahren.

4. Vorrichtung nach Anspruch 3, **dadurch gekennzeichnet, dass** die beiden Halterungen (14) synchron über das oder die Stellmittel (21) bewegbar sind.

5. Vorrichtung nach einem der Ansprüche 2 bis 4, **dadurch gekennzeichnet, dass** beide Spreizstäbe (13) oder die vier Spreizstababschnitte (38, 39) an an der jeweiligen Halterung (14) schwenkgelagerten Schwenkarmen (35, 36) angeordnet sind, welche Schwenkarme (35, 36) mit dem oder jeweils mit einem Antriebsmittel bewegungsgekoppelt sind.

6. Vorrichtung nach Anspruch 5, **dadurch gekennzeichnet, dass** das Antriebsmittel eine drehangetriebene Antriebswelle (34), insbesondere eine Sechskantwelle umfasst, auf der ein oder zwei einen Spreizstab (13) tragende Schwenkarme (35, 36) angeordnet sind, wobei der oder die anderen Schwenkarme (35, 36), die den anderen Spreizstab (13) tragen, bewegungsgekoppelt sind, oder dass das Antriebsmittel zwei drehangetriebene Antriebswellen (34), insbesondere Sechskantwellen umfasst, auf denen jeweils ein oder zwei den jeweiligen Spreizstab (13) oder die Spreizstababschnitte (38, 39) tragende Schwenkarme (35, 36) angeordnet sind.

7. Vorrichtung nach Anspruch 6, **dadurch gekennzeichnet, dass** die oder beide Antriebswellen (34) über einen Hebelmechanismus (31) mit wenigstens einem oder jeweils mit einem Stellelement, insbesondere einem Stellzylinder (29) gekoppelt sind, dessen Betätigung zu einer Bewegung des Hebelmechanismus (31) und daraus resultierend zu einer Drehung der oder jeder Antriebswelle (34) führt.

8. Vorrichtung nach einem der vorangehenden Ansprüche, **dadurch gekennzeichnet, dass** die Bildaufnahmeeinrichtung (10) unterhalb des Wurststrangs (4) verfährt.

9. Vorrichtung nach Anspruch 8, **dadurch gekennzeichnet, dass** die Bildaufnahmeeinrichtung (10) derart angeordnet ist, dass ihre optische Achse vertikal zur Längsbewegungsrichtung des Schneidmessers (8) und, gesehen in Längsbewegungsrichtung, vor dem Schneidmesser (8) liegt.

10. Vorrichtung nach einem der vorangehenden Ansprüche, **gekennzeichnet durch** eine, vorzugsweise zusammen mit der Bildaufnahmeeinrichtung (10) bewegbare, Beleuchtungseinrichtung (24) zum Beleuchten des Wurststrangs (4) zumindest im Bereich der aufzunehmenden Abdrehungen (6).

11. Vorrichtung nach Anspruch 8 oder 9 und Anspruch 10, **dadurch gekennzeichnet, dass** die bewegbare Beleuchtungseinrichtung (24) in den Wurststrang (4) einfährt und die Abdrehungen (6) von oberhalb beleuchtet.

12. Vorrichtung nach einem der vorangehenden Ansprüche, **dadurch gekennzeichnet, dass** die Bildaufnahmeeinrichtung (10) und/oder die Beleuchtungseinrichtung (24) mit dem Schneidmesser (8) an einem gemeinsamen, über ein Stellmittel (17) linear bewegbaren Träger (9) angeordnet sind.

13. Vorrichtung nach einem der vorangehenden Ansprüche, **dadurch gekennzeichnet, dass** das Schneidmesser (8) eine über ein linear arbeitendes Stellmittel (15) vertikal bewegbare Klinge (21) ist.

14. Vorrichtung nach einem der vorangehenden Ansprüche, **dadurch gekennzeichnet, dass** das Schneidmesser (8) mittels einer Halterung (22) an einer Linearführung (23) horizontal über ein Stellmittel (16) beweglich angeordnet ist.

15. Vorrichtung nach einem der vorangehenden Ansprüche, **dadurch gekennzeichnet, dass** als Stellmittel (15, 16, 21) elektro-magnetische Linearmotoren vorgesehen sind.

16. Vorrichtung nach einem der vorangehenden Ansprüche, **dadurch gekennzeichnet, dass** eine den bestückten Träger (5) aufnehmende Fördereinrichtung zum seitlichen Bewegen des Trägers (5) in die Schneidstellung, in welcher die Spreizeinrichtung (12) einfahrbar ist, vorgesehen ist.

17. Vorrichtung nach Anspruch 16, **dadurch gekennzeichnet, dass** die Fördereinrichtung den Träger (5) nach Durchführung der Trennung in eine Abnahmeposition fördert.

18. Vorrichtung nach Anspruch 16 oder 17, **dadurch gekennzeichnet, dass** die Fördereinrichtung zwei synchron laufende Förderbänder (43) umfasst, die den Träger (5) in einer Horizontalebene senkrecht zur Linearbewegungsrichtung der Spreizeinrichtung (12) fördern.

19. Vorrichtung nach Anspruch 18, **dadurch gekennzeichnet, dass** die Förderbänder (43) oberseitig Mitnehmerstollen (42) aufweisen.

## Claims

1. Apparatus for separating pairs of sausages from a string of sausages comprising a multiplicity of individual sausages (3) connected to one another by twists (6), which string of sausages (4) is wound helically around a rod-like or stick-like carrier (5) in such a way that the sausages (3) hang down on both sides of the carrier (5) and the twists (6) on the upper side of the strand are located on the upper side of the carrier and on the underside of the strand are located in the freely hanging area, **characterized by** a spreading device (12), which can be inserted linearly into the string of sausages (4) wound in the form of a helix and, in the inserted position, can be moved laterally apart in order to spread the string of sausages (4) apart, a cutting knife (8) which can be moved linearly underneath the carrier (5) in order to cut through the twists (6) on the underside of the string and which can be moved laterally, and also a linearly movable image recording device (10) with associated image evaluation means for picking up the spread string of sausages (4) in the area of the twists (6) on the underside of the string and for determining twist position data, the lateral displacement of the cutting knife (8) being controlled as a function of the twist position data determined.

2. Apparatus according to Claim 1, **characterized in that** the spreading device (12) comprises at least two spreading rods (13) which can be inserted into the string of sausages (4), and which are arranged such that they can be pivoted or displaced by a common or respective drive means on a holder (14) that can be moved linearly via an actuating means (21).

3. Apparatus according to Claim 2, **characterized in that** two holders (14) that can be moved linearly via a common or respective actuating means (21) are provided, on which in each case two spreading rod sections (38, 39) are arranged, in each case two spreading rod sections (38, 39) moving towards or into each other, forming a spreading rod (13), during the movement into the inserted position.

4. Apparatus according to Claim 3, **characterized in that** the two holders (14) can be moved synchronously by the single or plural actuating means (21).

5. Apparatus according to one of Claims 2 to 4, **characterized in that** both spreading rods (13) or the four spreading rod sections (38, 39) are arranged on pivoting arms (35, 36) that are mounted such that they can pivot on the respective holder (14), which pivoting arms (35, 36) are coupled in terms of movement to the drive means or each to one drive means.

6. Apparatus according to Claim 5, **characterized in that** the drive means comprises a drive shaft (34) driven in rotation, in particular a hexagonal shaft, on which one or two pivoting arms (35, 36) carrying a spreading rod (13) are arranged, the other pivoting arm or arms (35, 36) which carry the other spreading rod (13) being coupled in terms of movement, or **in that** the drive means comprises two drive shafts (34) driven in rotation, in particular hexagonal shafts, on which one or two pivoting arms (35, 36) carrying the respective spreading rod (13) or the spreading rod sections (38, 39) are respectively arranged.

7. Apparatus according to Claim 6, **characterized in that** the drive shaft or both drive shafts (34) is or are coupled via a lever mechanism (31) to at least one or each to an actuating element, in particular an actuating cylinder (29), the actuation of which leads to a movement of the lever mechanism (31) and, resulting therefrom, to a rotation of the or each drive shaft (34).

8. Apparatus according to one of the preceding claims, **characterized in that** the image recording device (10) moves underneath the string of sausages (4).

9. Apparatus according to Claim 8, **characterized in that** the image recording device (10) is arranged in such a way that its optical axis is located vertically with respect to the longitudinal direction of movement of the cutting knife (8) and, seen in the longitudinal direction of movement, is located in front of the cutting knife (8).

10. Apparatus according to one of the preceding claims, **characterized by** an illuminating device (24), which can preferably be moved together with the image recording device (10), for illuminating the string of sausages (4), at least in the area of the twists (6) to be recorded.

11. Apparatus according to Claim 8 or 9 and Claim 10, **characterized in that** the movable illuminating device (24) moves into the string of sausages (4) and illuminates the twists (6) from above.

12. Apparatus according to one of the preceding claims, **characterized in that** the image recording device (10) and/or the illuminating device (24) are arranged together with the cutting knife (8) on a common carrier (9) that can be moved linearly via an actuating means (17).

13. Apparatus according to one of the preceding claims, **characterized in that** the cutting knife (8) is a blade (21) that can be moved vertically via a linearly operating actuating means (15).

14. Apparatus according to one of the preceding claims, **characterized in that** the cutting knife (8) is arranged such that it can be moved horizontally via an actuating means (16) on a linear guide (23) by means of a holder (22).

15. Apparatus according to one of the preceding claims, **characterized in that** the actuating means (15, 16, 21) provided are electromagnetic linear motors.

16. Apparatus according to one of the preceding claims, **characterized in that** a conveying device receiving the populated carriers (5) is provided for the lateral movement of the carrier (5) into the cutting position, into which the spreading device (12) can be inserted.

17. Apparatus according to Claim 16, **characterized in that** the conveying device conveys the carrier (5) into a removal position after the separation has been carried out.

18. Apparatus according to Claim 16 or 17, **characterized in that** the conveying device comprises two synchronously running conveyor belts (43), which convey the carrier (5) in a horizontal plane perpendicular to the linear direction of movement of the spreading device (12).

19. Apparatus according to Claim 18, **characterized in that** the conveyor belts (43) have driver cleats (42) on the upper side.

## Revendications

1. Dispositif de séparation par paires de saucisses d'une chaîne de saucisses comportant une pluralité de saucisses (3) individuelles reliées les unes aux autres par des torsions (6), laquelle chaîne de saucisses (4) est enroulée de manière hélicoïdale autour d'un support (5) de type barre ou bâton, de telle sorte que les saucisses (3) pendent de part et d'autre du support (5) et que les torsions (6) se trouvent sur le côté supérieur du support du côté supérieur de la chaîne et dans la région pendant librement du côté inférieur de la chaîne, **caractérisé par** un dispositif d'écartement (12) qui peut être inséré linéairement dans la chaîne de saucisses (4) enroulée de manière hélicoïdale et peut être déplacé de manière à s'écarter latéralement dans la position insérée pour écarter la chaîne de saucisses (4), une lame de coupe (8) déplaçable linéairement en dessous du support (5) pour sectionner les torsions (6) du côté inférieur de la chaîne, laquelle lame de coupe est déplaçable latéralement, ainsi qu'un dispositif d'acquisition d'images (10) déplaçable linéairement doté de moyens d'analyse d'images associés pour enregistrer la chaîne de saucisses écartée (4) dans la région des torsions (6) du côté inférieur de la chaîne et pour évaluer des données de position de torsion, le coulissement latéral de la lame de coupe (8) étant commandé en fonction des données de position de torsion évaluées.

2. Dispositif selon la revendication 1, **caractérisé en ce que** le dispositif d'écartement (12) comporte au moins deux barres d'écartement (13) insérables dans la chaîne de saucisses (4), lesquelles sont disposées sur un support (14) déplaçable linéairement par le biais d'un moyen de réglage (21) de manière pivotante ou coulissante par le biais d'un moyen d'entraînement commun ou respectif.

3. Dispositif selon la revendication 2, **caractérisé en ce que** deux supports (14) déplaçables linéairement par le biais d'un moyen de réglage (21) commun ou respectif sont prévus, sur lesquels sont disposées respectivement deux portions de barre d'écartement (38, 39), deux portions de barre d'écartement (38, 39) respectives se déplaçant l'une contre l'autre ou l'une dans l'autre en formant une barre d'écartement (13) lors du déplacement dans la position insérée.

4. Dispositif selon la revendication 3, **caractérisé en ce que** les deux supports (14) sont déplaçables de manière synchrone par le biais du ou des moyens de réglage (21).

5. Dispositif selon l'une quelconque des revendications 2 à 4, **caractérisé en ce que** les deux barres d'écartement (13) ou les quatre portions de barre d'écartement (38, 39) sont disposées sur des bras pivotants (35, 36) montés à pivotement sur le support respectif (14), lesquels bras pivotants (35, 36) sont accouplés en déplacement au moyen d'entraînement ou à un moyen d'entraînement respectif.

6. Dispositif selon la revendication 5, **caractérisé en ce que** le moyen d'entraînement comporte un arbre d'entraînement (34), en particulier un arbre hexagonal, entraîné en rotation, sur lequel sont disposés un ou deux bras pivotants (35, 36) portant une barre d'écartement (13), le ou les autres bras pivotants (35, 36), qui portent l'autre barre d'écartement (13), étant accouplés en déplacement, ou **en ce que** le moyen d'entraînement comporte deux arbres d'entraînement (34), en particulier des arbres hexagonaux, entraînés en rotation, sur lesquels sont disposés respectivement un ou deux bras pivotants (35, 36) portant la barre d'écartement respective (13) ou les portions de barre d'écartement (38, 39).

7. Dispositif selon la revendication 6, **caractérisé en ce que** l'arbre d'entraînement ou les deux arbres d'entraînement (34) sont, par le biais d'un mécanisme à levier (31), accouplés à au moins un élément de réglage ou à un élément de réglage respectif, en particulier à un cylindre de réglage (29), dont l'actionnement mène à un déplacement du mécanisme à levier (31) et par conséquent à une rotation de l'arbre d'entraînement ou de chaque arbre d'entraînement (34).

8. Dispositif selon l'une quelconque des revendications précédentes, **caractérisé en ce que** le dispositif d'acquisition d'images (10) se déplace en dessous de la chaîne de saucisses (4).

9. Dispositif selon la revendication 8, **caractérisé en ce que** le dispositif d'acquisition d'images (10) est disposé de telle sorte que son axe optique se situe verticalement par rapport à la direction de déplacement longitudinale de la lame de coupe (8) et, vu dans la direction de déplacement longitudinale, avant la lame de coupe (8).

10. Dispositif selon l'une quelconque des revendications précédentes, **caractérisé par** un dispositif d'éclairage (24), de préférence déplaçable conjointement avec le dispositif d'acquisition d'images (10), pour éclairer la chaîne de saucisses (4) au moins dans la région des torsions (6) à enregistrer.

11. Dispositif selon la revendication 8 ou 9 et la revendication 10, **caractérisé en ce que** le dispositif d'éclairage déplaçable (24) s'insère dans la chaîne de saucisses (4) et éclaire les torsions (6) par le dessus.

12. Dispositif selon l'une quelconque des revendications précédentes, **caractérisé en ce que** le dispositif d'acquisition d'images (10) et/ou le dispositif d'éclairage (24) sont disposés avec la lame de coupe (8) sur un support (9) commun déplaçable linéairement par le biais d'un moyen de réglage (17).

13. Dispositif selon l'une quelconque des revendications précédentes, **caractérisé en ce que** la lame de coupe (8) est une lame (21) déplaçable verticalement par le biais d'un moyen de réglage (15) fonctionnant linéairement.

14. Dispositif selon l'une quelconque des revendications précédentes, **caractérisé en ce que** la lame de coupe (8) est disposée de manière déplaçable horizontalement par le biais d'un moyen de réglage (16) sur un guide linéaire (23) au moyen d'un support (22).

15. Dispositif selon l'une quelconque des revendications précédentes, **caractérisé en ce que** des moteurs linéaires électromagnétiques sont prévus en tant que moyens de réglage (15, 16, 21).

16. Dispositif selon l'une quelconque des revendications précédentes, **caractérisé en ce qu'**il est prévu un dispositif de transport recevant le support garni (5) pour déplacer latéralement le support (5) dans la position de coupe dans laquelle le dispositif d'écartement (12) peut être inséré.

17. Dispositif selon la revendication 16, **caractérisé en ce que** le dispositif de transport (5) transporte le support dans une position de retrait après que la séparation a été effectuée.

18. Dispositif selon la revendication 16 ou 17, **caractérisé en ce que** le dispositif de transport comporte deux bandes transporteuses (43) fonctionnant de manière synchrone, lesquelles transportent le support (5) dans un plan horizontal normal à la direction de déplacement linéaire du dispositif d'écartement (12).

19. Dispositif selon la revendication 18, **caractérisé en ce que** les bandes transporteuses (43) comprennent des barrettes d'entraînement (42) du côté supérieur.
